# EUROPÄISCHE PATENTSCHRIFT

(11) **EP 1 120 380 B1**
(45) Veröffentlichungstag und Bekanntmachung des Hinweises auf die Patenterteilung: **07.09.2005**
(21) Anmeldenummer: 01101335.6
(22) Anmeldetag: 21.01.2001
(51) Int. Cl.: C02F 3/12, B01D 21/00, B01D 21/08, B01D 21/24, C02F 5/02

(54) **Reaktor zum Enthärten und/oder Aufbereiten von Wasser**
Reactor for water softening and/or treatment
Réacteur pour l'adoucissement et/ou le traitement de l'eau

(30) Priorität: 21.01.2000 DE 10002660
(43) Veröffentlichungstag der Anmeldung: 01.08.2001
(73) Patentinhaber: Althöfer, Philipp, Dipl.-Geogr., 50827 Köln (DE)
(72) Erfinder: Althöfer, Philipp, Dipl.-Geogr., 50827 Köln (DE)
(74) Vertreter: Stute, Ivo Peter

(56) Entgegenhaltungen:
- WO-A-96/30308
- DE-A- 19 918 695
- PATENT ABSTRACTS OF JAPAN vol. 006, no. 063 (C-099), 22. April 1982 (1982-04-22) & JP 57 004296 A (DOWA MINING CO LTD), 9. Januar 1982 (1982-01-09)

## Beschreibung

Die vorliegende Erfindung betrifft eine Vorrichtung sowie ein Verfahren zum Enthärten von Wasser bzw. zum aeroben Aufbereiten von organisch beladenem Wasser.

Industrieabwässer, insbesondere solche von der Zellstoff verarbeitenden Industrie, sind in der Regel mit großen Mengen an darin gelösten oder suspendierten organischen und auch anorganischen Frachten beladen, wobei insbesondere die organischen Frachten für hohe CSB-Werte (CSB = chemischer Sauerstoffbedarf) und BSB-Werte (BSB = biologischer Sauerstoffbedarf) verantwortlich sind. Damit solche Abwässer in die öffentliche Kanalisation eingeleitet werden können, müssen diese Frachten reduziert werden. Mehr noch ist man im Sinne der Abwasservermeidung aber bestrebt, die Abwässer derart aufzubereiten, daß sie einem Produktionsprozeß wieder zugeführt werden können.

Zur Abwasseraufbereitung durchläuft das Abwasser in der Regel zunächst ein anaerobes Verfahren und wird danach aerob geklärt. Bei dem anaeroben Verfahren werden die organischen Stoffe unter Einsatz von anaeroben Mikroorganismen unter Bildung von geringen Mengen an Biomasse abgebaut. Die anschließende aerobe Klärung des aus der anaeroben Aufbereitung stammenden Wassers kann durch Zufuhr von Sauerstoff bzw. Luft erfolgen. Häufig wird zur aeroben Klärung auch ein Kontaktschlammverfahren bzw. Belebtschlammverfahren eingesetzt, worin das Wasser in einem Behälter beziehungsweise Reaktor mit Biomasse versetzt wird, welche aerobe oder fakultativ aerobe Mikroorganismen enthält.

Die Reduzierung der organischen Frachten kann mit dem anaeroben Verfahren bis zu 80 % CSB betragen, bei der aeroben Klärung kann ein weiterer Abbau bis zu 60 % CSB erfolgen.

Ein derart aufbereitetes Abwasser kann in der Regel in die öffentliche Kanalisation eingeleitet werden. Es hat sich jedoch gezeigt, daß der Gehalt an anorganischen Stoffen, insbesondere an Carbonaten, im aufbereiteten Abwasser in der Regel nicht ausreichend reduziert werden kann, um es erneut einem Produktionsprozeß zuführen zu können.

Auch besteht der Nachteil, daß das derart aufbereitete Abwasser einen hohen Härtegrad aufweist, was bei einer Rückführung in den Produktionsprozeß zu einer Verkalkung der Produktionsanlagen führen kann, und daher nur eine begrenzte beziehungsweise keine Rückführung dieses Wassers in ein Produktionsverfahren erlaubt, ohne daß das Risiko von Verfahrensunterbrechungen in Kauf genommen werden muß.

Aus der WO 96/30308 ist ein Reaktor zur aeroben Aufbereitung von Wasser mit einem Gehäuse bekannt, indem ein hohlzylindrisches, nach oben und unten offenes Behältnis angeordnet ist, in dessen untere Seite ein in einen Stutzen mündender, umgekehrter Trichter eingreift. Am Gehäuse ist in Höhe oberhalb des oberen Endes des Stutzens ein Übertaufwehr vorgesehen. Der untere Teil des Gehäuses läuft nach unten spitz zu und dient unter anderem als Aufnahme für einen Schlammkuchen. Zur anaeroben Aufbereitung von Wasser wird in dem Schlammkuchen am Boden des Gehäuses entstehendes Biogas vom umgekehrten Trichterelement aufgefangen und durch die Verjüngung des Trichters beschleunigt. Durch die Strömungsbeschleunigung soll erreicht werden, dass das im Trichter eingefangene Biogas mit dem Wasser durchgemischt wird. Über den aufgrund der Strömung an der Unterseite des Trichters entstehenden Unterdruck bzw. über den Dichteunterschied zwischen dem Gas-/Wassergemisch innerhalb des Trichters und dem entgasenden Wasser außerhalb des Trichters wird darüber hinaus eine umlaufende Strömung induziert, die innerhalb des Trichters aufwärts und außerhalb des Trichters abwärts gerichtet ist. Zur aeroben Aufbereitung des Wassers ist am unteren Rand an der Innenseite der Trichteröffnung ein Diffusor vorgesehen über den dem Wasser Luft zugeführt wird.

Aus der JP 57004296 A ist ein Reaktor zur Aufbereitung schwefelbelasteter Abwässer bekannt, bei dem durch Reduktion der Schwefelfracht ein Abbau von CSB erfolgt. Bei diesem Fällungsreaktor wird das aufzubereitende Wasser von oben zugeführt und von unten belüftet. Somit erfolgt die Belüftung im Gegenstrom.

Demgegenüber liegt der vorliegenden Erfindung die Aufgabe zugrunde, eine Vorrichtung zur Verfügung zu stellen, die eine verbesserte Aufbereitung von hartem und/oder organisch belastetem Abwasser ermöglicht, mit der das aufbereitete Abwasser einem Produktionsprozeß wieder zugeführt werden und somit der Wasserkreislauf geschlossen werden kann.

Diese Aufgabe wird mit einer Vorrichtung zum aeroben Aufbereiten von organisch beladenem Wasser und/oder zum Enthärten von Wasser mit den Merkmalen des Anspruchs 1 gelöst.

In einer solchen Vorrichtung zirkuliert das zu enthärtende Wasser in einem Kreislauf von der Belüftungszone über die Entgasungszone und die Sedimentationszone bis wieder hin zur Belüftungszone. Dabei wird das zu enthärtende Wasser in der Belüftungszone mit geeigneter Druckluft versetzt. Als geeignete Druckluft kommt jedes Gas oder Gasgemisch in Frage, in dem kein CO₂ oder zumindest nur in einer so geringen Konzentration enthalten ist, daß im Wasser gelöstes CO₂ über die Grenzfläche zwischen Wasser und Gasblase in letztere übergehen kann. Das Wasser und die Druckluft durchströmen die Belüftungszone und die Entgasungszone im wesentlichen im Gleichstrom, wobei im Wasser gelöstes CO₂ von der Druckluft aufgenommen wird und an der Wasseroberfläche in der Entgasungszone zusammen mit der Druckluft austritt.

Somit wird dem Wasser darin enthaltenes CO₂ entzogen, so daß entsprechend der Gleichgewichtsreaktion 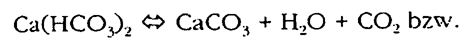 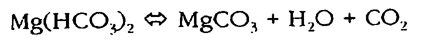 CaCO₃ bzw. MgCO₃ ausfällt. Vorzugsweise liegt dabei der pH-Wert über 7,5.

In der Sedimentationszone besteht eine abwärts gerichtete Strömung, so daß ausgefällte Carbonate in Richtung der Schwerkraft transportiert werden und sich gegebenenfalls in einem Bodenbereich der Sedimentationszone absetzen können. Im einfachsten Fall erfüllt die Sedimentationszone in dieser Vorrichtung allerdings nur die Funktion der Rückführung des Wassers aus der Entgasungszone in die Belüftungszone in einer gerichteten Strömung.

Nach Erreichen eines ausreichenden Enthärtungsgrades kann das Wasser dann über einen Ablauf abgezogen werden. In der Sedimentationszone abgesetzte Carbonate können herausgespült werden, wobei alle ausgefällten Carbonate beispielsweise aus dem enthärteten Wasser herausgefiltert werden können.
Auch kann der Betrieb derart erfolgen, daß dem zu enthärtenden Wasser zunächst CO₂ zugeführt wird, so daß bereits im Wasser befindliche Carbonatpartikel gelöst werden, um dann durch das Abführen von CO₂ in der Entgasungszone in Form größerer Partikel wieder auszufällen.

Der Enthärtungsprozeß kann sowohl kontinuierlich als auch diskontinuierlich betrieben werden.

Es hat sich gezeigt, daß mit einer solchen Vorrichtung auf einfache Weise und ohne die Verwendung von Salzen oder sonstigen Chemikalien Wasser effektiv und in kurzer Zeit enthärtet werden kann.

In bezug auf die Enthärtung von Wasser arbeitet diese erfindungsgemäße Vorrichtung ähnlich wie die zuvor beschriebene. Der einzige wesentliche Unterschied besteht darin, daß die in der Sedimentationszone absinkenden ausgefällten Carbonate weiter in die darunter angeordnete Ruhezone absinken können. In der Ruhezone ist die Strömungsgeschwindigkeit erheblich reduziert, so daß sich an seinem Boden ein Sediment ausbilden kann, das als solches über einen Auslaß direkt abgezogen wird. Auf diese Weise kann der Aufwand für eine nachgeschaltete Filterung des Wassers wirkungsvoll vermieden werden.

Bei der mit dieser Vorrichtung ebenso möglichen Aufbereitung von organisch beladenem Wasser wird die im Wasser angereicherte Biomasse durch Belüftungselemente mit Sauerstoff versorgt, so daß die in der Biomasse enthaltenen Bakterien die das Wasser belastenden Organika umsetzen können und damit der CSB-Wert des Wassers reduziert wird.
Auch hier dient die Sedimentationszone zum einen der Rückführung des Wassers von der Entgasungszone in die Belüftungszone. Zum anderen können sich in der Sedimentationszone Schlammflocken ausbilden und bis in die Ruhezone absinken, wo sie als Sediment direkt über einen Auslaß abgezogen werden können.

Der abgezogene Schlamm kann dem Aufbereitungsprozeß wieder zugeführt werden. Dies hat den Vorteil, daß mit steigendem Schlammalter die Biomasse sich an die aufzubereitende organische Beladung adaptiert, so daß der CSB-Abbau optimiert ist. Auch liegen mit dem zugeführten Schlamm im aufzubereitenden Wasser ausreichend Kristallisationskeime zur Flockenbildung bzw. zur Ausfällung von Carbonaten vor.

Mit der Vorrichtung kann ein hoher CSB-Abbau erzielt werden. Daher kann die Vorrichtung nicht nur zur nachgeordneten aeroben Behandlung von bereits anaerob vorbehandeltem industriellem Abwasser verwendet werden, sondern auch als einzige Behandlungsstufe, ohne daß das Abwasser anaerob vorbehandelt worden ist. In diesem Fall muß dem der Vorrichtung zugeführten, aufzubereitenden Wasser Biomasse zugefügt werden.

Auch hat sich bei dem Betrieb beider Vorrichtungen gezeigt, daß im Wasser vorhandene Cl - Ionen abgebaut werden können, ebenso wie die Leitfähigkeit des Wassers herabgesetzt werden kann.
Auch ist es denkbar, mit den Vorrichtungen eine Teilentsalzung von Wasser durchzuführen, beispielsweise durch das Abtrennen von CaSO₄.

Grundsätzlich können in beiden erfindungsgemäßen Vorrichtungen die einzelnen Zonen in verschiedenen miteinander in Verbindung stehenden Kammern oder in getrennten Behältern vorgesehen sein, die über Leitungen miteinander verbunden sind und bei denen ein Durchlauf des aufzubereitenden Abwassers durch die Zonen gegebenenfalls mit Unterstützung von Pumpen erfolgt. Allerdings wird man in der Regel mindestens die Belüftungszone und die Entgasungszone in einer gleichen Kammer vorsehen, die von dem Wasser aufwärts durchströmt wird, wobei die Strömung durch die zugesetzte Druckluft und die hierdurch im Wasser aufsteigenden Gasbläschen unterstützt wird.
Der besondere Vorteil der vorliegenden Vorrichtung besteht darüber hinaus darin, daß sowohl unabhängig voneinander als auch gleichzeitig eine effektive aerobe Aufbereitung und auch eine effektive Enthärtung des Wassers erfolgen kann. Diese Vorrichtung ist somit im Rahmen einer optimalen Wasseraufbereitung universal einsetzbar.

In bevorzugter Ausgestaltung mündet der Wasserzulauf beider Vorrichtungen von oben in die Sedimentationszone. Hierdurch wird eine abwärts gerichtete Strömung induziert, die die Führung des in der Vorrichtung befindlichen Wassers in einem Kreislauf unterstützt.

In einer ebenso bevorzugten Ausgestaltung mündet der Wasserzulauf unterhalb des Wasserspiegels ein. Hierdurch wird vermieden, daß die Austrittsöffnung des Wasserzulaufs verkalkt, da im Zulaufbereich kein im zulaufenden Wasser gelöstes CO₂ von der Umgebungsluft aufgenommen werden kann und somit keine Carbonate ausfällen können.

Die Belüftungszone ist derart ausgebildet, daß das Wasser durch sie im wesentlichen vertikal hindurch strömen muß. Somit kann die in die Belüftungszone eingebrachte Druckluft eine aufwärts gerichtete Strömung in der Belüftungszone induzieren oder zumindest unterstützen. Hierdurch kann ein Sogeffekt entstehen, durch den Wasser aus der Sedimentationszone in die Belüftungszone angesogen wird, wodurch Turbulenzen in der Strömung im Bereich des Übergangs von Sedimentationszone zu Belüftungszone vermindert oder unterbunden werden können.

Die Vorrichtungen lassen sich äußerst kompakt und einfach ausbilden, wenn die Belüftungszone, die Entgasungszone und die Sedimentationszone Bestandteile eines Reaktors sind, wobei zwischen der Belüftungszone und der Entgasungszone auf der einen Seite und der Sedimentationszone auf der anderen Seite eine Zwischenwand angeordnet ist. Die Zwischenwand dient dabei als Trennung zwischen der aufwärts gerichteten und der abwärts gerichteten Strömung des Wassers.

In einer besonderen Ausgestaltung eines solchen Reaktors kann die Zwischenwand vertikal verschiebbar angeordnet sein. Hierdurch läßt sich insbesondere der Durchtrittsquerschnitt zwischen Sedimentationszone und Belüftungszone einstellen, so daß die Strömungsverhältnisse für das Verfahren im laufenden Betrieb optimiert werden können. Beispielsweise kann durch die Veränderung der Strömungsbildung die Kristallbildung beeinflußt werden.

Auch die Ruhezone kann, sofern vorhanden, sinnvoller weise Bestandteil des Reaktors sein, wobei dann ein Zwischenboden zwischen der Ruhezone und den übrigen Zonen angeordnet ist. Hiermit wird die Durchtrittsöffnung von Sedimentationszone zu Ruhezone begrenzt.

Es kann vorteilhaft sein, wenn auch der Durchtrittsquerschnitt von Sedimentationszone zu Ruhezone veränderlich ist. Hierzu kann der Zwischenboden vertikal verschiebbar angeordnet und sich der Reaktorquerschnitt im oberen Bereich der Ruhezone nach unten hin verjüngend ausgebildet sein.
Hiermit ist es möglich, den von der Sedimentationszone in die Ruhezone übergehenden Durchsatz an Wasser einzustellen oder zu steuern. So kann der Durchsatz in einer Betriebsart des Reaktors an die aus der Ruhezone abgezogene Menge an Wasser und Schlamm angepaßt werden.

Wenn der Reaktorquerschnitt an einer Stelle im oberen Bereich der Ruhezone dem Querschnitt des Zwischenbodens entspricht, kann die Ruhezone vollständig von den übrigen Zonen abgetrennt werden.
Hiermit werden verschiedene Betriebsarten des Reaktors möglich. So kann die Ruhezone vor einer Erstbefüllung des Reaktors geschlossen sein, so daß kein hartes oder einen hohen CSB-Wert aufweisendes Wasser in die Ruhezone gelangen kann. Das aufzubereitende Wasser wird dann solange im oberen Bereich des Reaktors in der Belüftungszone, der Entgasungszone und der Sedimentationszone aufbereitet, bis ein bestimmter Härtegrad bzw. CSB-Wert erreicht ist. Erst dann wird die Ruhezone geöffnet und mit dem aufbereiteten Wasser gefüllt. Wenn dann neues aufzubereitendes Wasser in den Reaktor - sei es kontinuierlich oder intermittierend - nachgefüllt wird, durchmischt sich dieses Wasser mit dem bereits aufbereiteten, so daß der Härtegrad bzw. der CSB-Wert der Gesamtheit des im Reaktor befindlichen Wassers in jedem Fall erheblich geringer ist als zum Zeitpunkt der Erstbefüllung. Die Ruhezone bleibt dann dauerhaft geöffnet.

In einer anderen Betriebsart ist die Ruhezone die meiste Zeit geschlossen. Dabei wird das Wasser zunächst im oberen Bereich des Reaktors aufbereitet und erst bei Erreichen des gewünschten Härtegrades bzw. CSB-Wertes vollständig in die Ruhezone abgelassen, die hierfür kurzzeitig geöffnet wird. Daraufhin kann der obere Teil des Reaktors wieder mit aufzubereitendem Wasser befüllt werden, während sich gleichzeitig in der Ruhezone Schlamm und/oder Carbonate am Boden der Ruhezone absetzen und abgezogen werden können und getrennt davon das aufbereitete Wasser abgezogen werden kann

Es ist von Vorteil, wenn die Oberseite des Zwischenbodens eine zur Durchtrittsöffnung zur Ruhezone hin abfallende Neigung von mindestens 60° aufweist. Somit ist sichergestellt, daß sich gegebenenfalls auf dem Zwischenboden absetzende Schlammflocken oder Carbonatpartikel zur Ruhezone hin abrutschen können. Dies ist insbesondere auch dann von Vorteil, wenn an der Oberseite des Zwischenbodens Belüftungselemente vorgesehen sind, die so nicht zugesetzt werden können.

Eine andere bevorzugte Ausgestaltung besteht darin, daß die Unterseite des Zwischenbodens so ausgebildet ist, daß sie zusammen mit der Reaktorwand im oberen Bereich der Ruhezone einen sich aufweitenden Kanal bildet. Hierdurch kann sichergestellt werden, daß im Bereich der Durchtrittsöffnung von Sedimentationszone zu Ruhezone, die als Drossel wirken kann, keine turbulente Strömungen auftreten.

Wenn der Zwischenboden innen hohl und an seiner Unterseite offen ausgebildet ist, kann der durch die Neigung der Oberseite des Zwischenbodens gebildete Raum für die Ruhezone genutzt werden.

Wie bereits erwähnt kann der Zwischenboden im Bereich der Belüftungszone mit einem oder mehreren Belüftungselementen versehen sein. Dabei kann der Zwischenboden über die Druckluftzuführung mit dem Reaktor verbunden sein.

Wie auch die Oberseite des Zwischenbodens kann auch der Boden der Ruhezone zum Abzug für den Schlamm hin abfallend um mindestens 60° geneigt sein.

Im weiteren kann es von Vorteil sein, wenn die Belüftungszone, die Entgasungszone, die Sedimentationszone und gegebenenfalls die Ruhezone thermisch isoliert sind. Somit kann die bei dem exothermen aeroben Abbau von CSB anfallende Wärme vollständig zur Aufheizung des im Reaktor befindlichen Wassers genutzt werden. Hierdurch wird zum einen der CSB-Abbau begünstigt. Zum anderen sinkt mit steigenden Temperaturen die Löslichkeit von Hydrogencarbonaten in Wasser, so daß ebenso eine Enthärtung begünstigt wird.

Dementsprechend kann der Reaktor auch beheizbar ausgebildet sein. Allerdings läßt sich die entstehende Wärme auch zu einer anderweitigen Verwendung abführen werden.

Es kann von Vorteil sein, oberhalb der Entgasungszone und gegebenenfalls auch oberhalb der Sedimentationszone eine Beregnungsvorrichtung anzuordnen, so daß einerseits sich an der Wasseroberfläche bildender Schaum beregnet werden und andererseits auch der pH-Wert des Wassers innerhalb der verschiedenen Zonen feingeregelt werden kann.

Auch kann oberhalb der Entgasungszone und/oder der Sedimentationszone eine Abzugshaube zum Absaugen von Druckluft und CO₂ angeordnet sein. Auf diese Weise ist es möglich, Druckluft und CO₂ im Aufbereitungsprozeß oder in anderen Prozessen wieder zu verwenden. So kann dem aufbereiteten Wasser, das nach erfolgter Enthärtung alkalisch ist, zur Neutralisierung wiedergewonnenes CO₂ zugesetzt werden. Auch kann die im Gemisch aus CO₂ und Druckluft enthaltene Wärme genutzt werden, beispielsweise zum Erwärmen des aufbereiteten Wassers. Außerdem kann mit der Abzugshaube verhindert werden, daß ungewünscht Emissionen austreten.

Auch ist es möglich, die Abzugshaube so auszugestalten, daß sie den Reaktor dicht verschließt. In diesem Fall kann über die Abzugshaube ein Unterdruck im Reaktor erzeugt werden.

Eine andere vorteilhafte Ausgestaltung besteht darin, daß das aufbereitete Wasser aus der Ruhezone wieder dem Wasserzulauf zugeführt werden kann. Somit kann das einmal aufbereitete Wasser erneut einer Aufbereitung unterzogen werden.

Ebenso ist Gegenstand der vorliegenden Erfindung ein Verfahren zur aeroben Aufbereitung von organisch beladenem Wasser und/oder zur Enthärtung von Wasser, bei dem
- aufwärts strömendes Wasser mit sauerstoffhaltiger Druckluft im Gleichstrom in einer Belüftungszone belüftet wird,
- die Druckluft gegebenenfalls mit darin enthaltenen, aus dem Wasser stammende CO₂ abgeführt wird,
- sich bildende Schlammflocken und gegebenenfalls ausfällendes CaCO₃ bzw. Mg₂CO₃ in einer Sedimentationszone bis in eine Ruhezone hinein absinken können, wobei das Wasser in der Sedimentationszone abwärts strömt,
- der überwiegende Teil des Wassers von der Sedimentationszone in die Belüftungszone überführt wird.

Ebenso ist Gegenstand der Anmeldung ein Verfahren zur aeroben Aufbereitung von organisch beladenem Wasser und/oder zur Enthärtung von Wasser, bei dem
- aufwärts strömendes Wasser mit sauerstoffhaltiger Druckluft im Gleichstrom in einer Belüftungszone belüftet wird,
- die Druckluft gegebenenfalls mit darin enthaltenen, aus dem Wasser stammende CO₂ abgeführt wird, und
- das Wasser zusammen mit sich bildenden Schlammflocken und/oder Carbonatpartikeln über eine Sedimentationszone solange wieder in die Belüftungszone hineingeführt wird, bis das ein gewünschter CSB-Wert oder ein Härtegrad erreicht ist,
und dann das aufbereitete oder enthärtete Wasser vollständig in eine Trennvorrichtung, insbesondere eine Ruhezone, abgeführt wird, wo Schlamm und/oder Carbonatpartikel als Feststoffe vom Wasser getrennt werden und Feststoffe und Wasser getrennt voneinander aus der Trennvorrichtung abgeführt werden.

Wie bereits erwähnt, kann eine Verfahrensweise darin bestehen, daß zu Beginn der Aufbereitung und/oder Enthärtung das aufzubereitende oder zu enthärtende Wasser entlang der Belüftungszone, der Entgasungszone und der Sedimentationszone zirkuliert, wobei die Ruhezone zunächst verschlossen ist, und daß die Ruhezone erst dann geöffnet wird, wenn ein bestimmter Aufbereitungsgrad oder Härtegrad des Wassers erreicht ist.

Eine andere mögliche Verfahrensweise besteht darin, daß die Ruhezone verschlossen ist, solange das aufzubereitende oder zu enthärtende Wasser entlang der Belüftungszone, der Entgasungszone und der Sedimentationszone zirkuliert, und daß mit Erreichen eines bestimmten Aufbereitungsgrades oder Härtegrades das Wasser vollständig in die Ruhezone abgelassen wird, wonach die Ruhezone wieder verschlossen wird und die Belüftungszone, die Entgasungszone und die Sedimentationszone erneut mit aufzubereitendem und/oder zu enthärtendem Wasser beladen wird.

Die Dauer zur Aufbereitung organisch beladenen Wassers kann bei diesem Verfahren 1 bis 24 Stunden, die Dauer zur Enthärtung von Wasser 1 Minute bis 1 Stunde betragen. Soll das Wasser sowohl enthärtet als auch aerob aufbereitet werden, kann je nach angestrebten Härtegrad oder CSB-Wert die Verweildauer zwischen 1 Minute und 24 Stunden liegen.

Die erfindungsgemäßen Vorrichtungen sowie die beanspruchten Verfahren sind für die Aufbereitung von Brauch- und Abwasser ebenso wie Betriebs- und Oberflächenwasser insbesondere in der zellstoffverarbeitenden Industrie wie der Papier-, Tapeten- und Textilindustrie und bei der Betonherstellung einsetzbar. Sie eignen sich aber auch zur Trinkwasseraufbereitung, nicht nur für die Getränkeindustrie. Der vorbeschriebene Reaktor ist als Universal-Fällungsreaktor in einer Vielzahl von Anwendungen verwendbar.

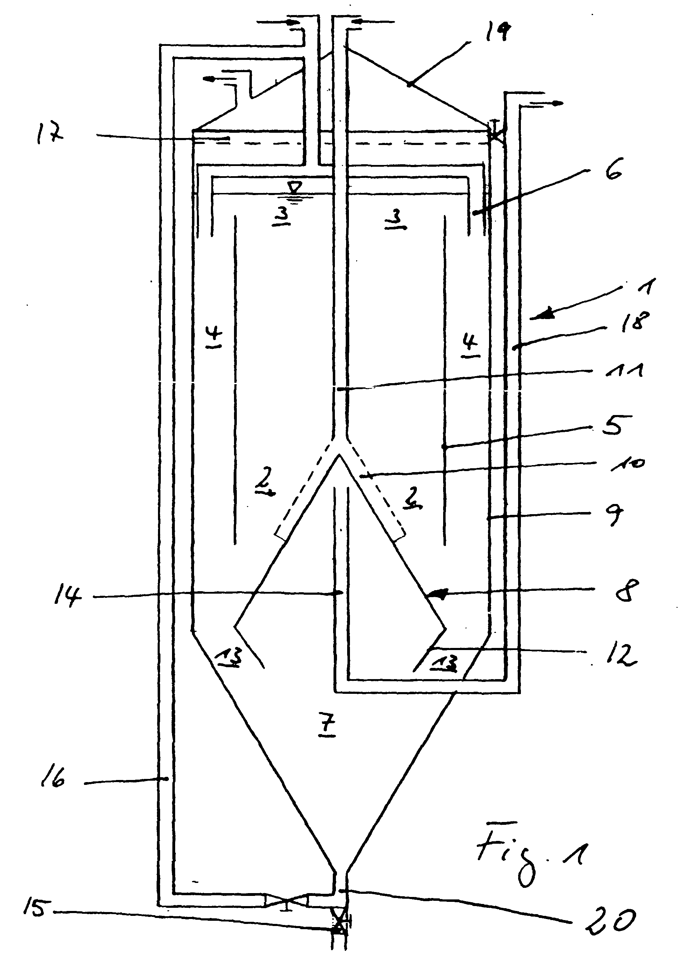

Im folgenden wird die Erfindung anhand Figur 1 erläutert, in der eine bevorzugte Ausführungsform des erfindungsgemäßen Reaktors im Querschnitt gezeigt ist.

Der dargestellte Reaktor **1** ist zylindrisch aufgebaut. Er weist eine zentrale, zylindrische Belüftungszone **2**, eine darüber angeordnete Entgasungszone **3** sowie eine um die Belüftungszone **2** und die Entgasungszone **3** herum angeordnete Sedimentationszone **4** auf. Die Sedimentationszone **4** ist von der Belüftungszone **2** und der Entgasungszone **3** über eine Zwischenwand **5** getrennt, wobei die Sedimentationszone **4** in ihrem unteren Bereich mit dem unteren Bereich der Belüftungszone **2** und der obere Bereich der Sedimentationszone **4** mit dem oberen Bereich der Entlüftungszone **3** insofern verbunden ist, als die Zwischenwand **5** die Zonen nicht über die gesamte Höhe **2**, **3**, **4** der Zonen voneinander trennt. Dabei ist die Zwischenwand **5** vertikal verstellbar angeordnet, so daß insbesondere der Öffnungsquerschnitt zwischen der Sedimentationszone **4** und Belüftungszone **2** einstellbar ist.

Ein Wasserzulauf **6** für aufzubereitendes Wasser mündet von oben in die Sedimentationszone **4**. Der Wasserzulauf kann ringförmig ausgebildet sein, so daß das aufzubereitende Wasser in Umfangsrichtung im wesentlichen gleichmäßig in die Sedimentationszone **4** eingebracht wird. Der Wasserzulauf **6** kann aber auch mit einem oder mehreren in Umfangsrichtung verteilt angeordneten Zulaufrohren verwirklicht werden.

Unterhalb der vorgenannten Zonen **2**, **3**, **4** ist im Bodenbereich des Reaktors **1** eine Ruhezone **7** angeordnet. Die Ruhezone ist durch einen Zwischenboden **8** von den anderen Zonen **2**, **3**, **4** getrennt, wobei zwischen Zwischenboden **8** und Reaktorwand **9** eine ringförmige Durchtrittsöffnung als Verbindung der Sedimentationszone **3** mit der Ruhezone **7** ausgebildet ist, angeordnet.

Während die Reaktorwand **1** oberhalb der Ruhezone **7** als Hohlzylinder ausgebildet ist, läuft sie im Bereich der Ruhezone **7** trichterförmig nach unten bis zu einem Schlammabzug **20** zu, wobei der Neigungswinkel, den die Reaktorwand mit der Waagerechten einschließt, mehr als 60° beträgt.

Der Zwischenboden **8** ist hohl ausgebildet und weist eine Oberseite auf, die zur Mittelachse des Reaktors hin mit einem Steigungswinkel von ca. 60° spitz zuläuft.

An der Oberseite des Zwischenbodens sind im Bereich der Belüftungszone Belüftungselemente **10** vorgesehen. Die Belüftungselemente **10** werden über eine Druckluftzuführung **11** mit der nötigen Druckluft versorgt. Die Druckluftzuführung **11** ist im vorliegenden Beispiel als Rohr ausgebildet, das von oben entlang der Mittelachse des Reaktors **1** in ihn hinein ragt und mit den Belüftungselementen **10** verbunden ist. Sie ist so ausgebildet und mit dem Zwischenboden **8** verbunden, daß sie diesen in seiner Position über der Ruhezone **7** hält. Die Druckluftzuführung kann auch in einer nicht dargestellten Ausführungsform von unten in den Zwischenboden hineingeführt und mit den Belüftungselementen verbunden sein.

In einer bevorzugten, sich aus der Figur allerdings nicht ergebenden Ausführungsform ist der Zwischenboden **8** an bzw. mit der Druckluftzuführung **11** vertikal verstellbar aufgehängt. Durch eine Verschiebung des Zwischenbodens **8** aus der in der Figur dargestellten Position nach unten kann die ringförmige Durchtrittsöffnung zwischen Sedimentationszone **4** und Ruhezone **7** verkleinert oder sogar ganz verschlossen werden.

An der Unterseite des Zwischenbodens ist ein ringförmiger Steg angeordnet, der zusammen mit der Reaktorwand **9** einen sich von der Durchtrittsöffnung in die Ruhezone **7** hinein öffnenden, ringförmigen Kanal **13** bildet. Die Unterseite des Zwischenbodens **8** ist nicht geschlossen, so daß der Hohlraum im Zwischenboden **8** Bestandteil der Ruhezone **7** ist.

Ein entlang der Mittelachse des Reaktors **1** verlaufendes Abzugsrohr **14** für den Abzug des aufbereiteten Wassers ragt von unten bis fast in die Spitze des Hohlraums des Zwischenbodens **8** hinein. In einer nicht dargestellten Ausführungsform kann das Anzugsrohr auch von oben kommend, beispielsweise parallel zur Druckluftzuführung geführt, durch den Zwischenboden hindurch in den Hohlraum des Zwischenbodens hinein ragen.
Das aufzubereitende Wasser wird über den Wasserzulauf **6** in die Sedimentationszone **4** eingelassen. Handelt es sich bei dem zugeführten Wasser um aerob aufzubereitendes, Biomasse enthaltendes Abwasser, kann es entweder aus einer anaeroben Vorbehandlung kommen, wobei es dann schon aus der Vorbehandlung mit aerob oder anaerob arbeitenden Mikroorganismen versetzt ist, oder aber direkt aus einem industriellen Verfahren stammen. Im letzteren Fall muß dem zulaufenden Wasser gegebenenfalls Biomasse mit aerob oder fakultativ aerob arbeitenden Mikroorganismen zugemischt werden.

Der überwiegende Teil des abwärts fließenden Wassers tritt vom unteren Bereich der Sedimentationszone **4** in die Belüftungszone **2** ein. Dort wird es durch über die Druckluftzuführung **11** zugeführtes Gas, das in Form gut verteilter kleiner Bläschen aus den Belüftungselemente **10** austritt und entgegen der Schwerkraft sowie im Gleichstrom mit dem Wasser nach oben strömt, belüftet, wobei eine große Kontaktfläche zwischen dem zugeführten Gas und dem aufzubereitenden Wasser besteht.

Bei der aeroben Aufbereitung des Wassers wird die organische Fracht über die Belüftung mit Sauerstoff versorgt, so daß die Biomasse durch die Mikroorganismen abgebaut wird. Dabei bilden sich feine Schlammpartikelchen, die zunächst im Wasser suspendiert sind. Sie können als Kristallisationskeime für Carbonate dienen, die aufgrund des oben beschriebenen Effektes des Austreibens von CO₂ in der Entgasungszone ausfällen.

Die Carbonate binden an die Schlammflocken, wobei sich das spezifische Gewicht der so gebildeten Feststoffe erhöht. Sie werden zwar noch mit der Strömung von der Entgasungszone **3** in die Sedimentationszone **4** transportiert, sinken dort aber bis in die Ruhezone **7** ab, wobei das Absinken in der Sedimentationszone durch die dort abwärts gerichtete Strömung begünstigt wird.

Der Schlamm kann entweder über ein Ablaßventil **15** aus dem Reaktor **1** abgeführt werden, oder aber über eine Schlammrückführung **16**, die mit dem Wasserzulauf für aufzubereitendes Wasser verbunden ist, der Aufbereitung wieder zugeführt werden.

Das aufbereitete Wasser wird durch das Abzugsrohr **14** aus der Ruhezone **7** abgezogen.

Über dem Wasserspiegel oberhalb der Entgasungszone **3** und der Sedimentationszone **4** ist ein Beregnungsvorrichtung **17** zum Beregnen von sich auf der Wasseroberfläche im Reaktor **1** bildenden Schaum vorgesehen, das mit aus der Ruhezone **7** abgezogenem Wasser gespeist werden kann. Hierfür ist das Beregnungsvorrichtung **17** über eine Wasserrückführung **18** mit dem Abzugsrohr **14** verbunden.

Auch weist der Reaktor **1** einen als Abzugshaube **19** ausgebildeten Deckel auf. Hierüber kann die im Reaktor zugeführte Druckluft zusammen mit dem aus dem aufzubereitenden Wasser stammenden CO₂ entweichen. Die Abzugshaube **19** kann schwenk- oder klappbar ausgeführt werden, damit der Reaktor **1** von oben zugänglich ist. Auch kann sie so ausgeführt sein, daß sie den Reaktor **1** dicht verschließt, so daß über die Abzugshaube **19** ein Unterdruck angelegt werden kann.

Die Reaktorwand **9** kann isoliert und/oder doppelwandig ausgeführt sein, wobei sie im letzteren Fall über Prozeßwasser aufgeheizt werden kann.

Auch kann der Reaktor andere den Enthärtungs- oder Aufbereitungsprozeß optimierende, hier nicht dargestellte Merkmale aufweisen. So kann der Reaktor mit einem Magneten versehen sein, mit dem beispielsweise im Bereich der Sedimentationszone ein magnetisches Feld angelegt werden kann. Hierdurch ist die Kalkablagerung an der Oberfläche der Reaktorwand beeinflußbar mit dem Ergebnis, daß sich statt einer ausgehärteten Kalkschicht lediglich eine Kalkschlammschicht an der Reaktorwand ablagert, die leicht abgewaschen werden kann.

### Bezugszeichenliste

- 1: Reaktor
- 2: Belüftungszone
- 3: Entgasungszone
- 4: Sedimentationszone
- 5: Zwischenwand
- 6: Wasserzulauf
- 7: Ruhezone
- 8: Zwischenboden
- 9: Reaktorwand
- 10: Belüftungselemente
- 11: Druckluftzuführung
- 12: Ringförmiger Steg
- 13: Kanal
- 14: Abzugsrohr
- 15: Ablaßventil
- 16: Schlammrückführung
- 17: Beregnungsvorrichtung
- 18: Wasserrückführung
- 19: Abzugshaube
- 20: Schlammabzug

## Patentansprüche

1. Vorrichtung zum aeroben Aufbereiten von organisch beladenem Wasser und/oder zum Enthärten von Wasser mit
- einem Wasserzulauf (6),
- einer Belüftungszone (2), mit einer Druckluftzuführung (11) mit Belüftungselementen (10), durch die das Wasser mit geeigneter Druckluft versetzt wird,
- einer der Belüftungszone (2) in Strömungsrichtung des Wassers nachgeordneten und mit dieser verbundenen Entgasungszone (3), wobei Druckluft und Wasser die Entgasungszone (3) im Gleichstrom durchströmen, und wobei im Wasser gelöstes CO₂ an die Druckluft abgegeben und zusammen mit der Druckluft aus der Entgasungszone (4) abgeführt wird,
- einer Sedimentationszone (4), in der Schlammflocken und gegebenenfalls ausfällendes CaCO₃ bzw. MgCO₃ absinken können, die an ihrer oberen Seite mit der Entgasungszone (3) und an ihrer unteren Seite mit der Belüftungszone (2) in Verbindung steht, und
- einer unterhalb der Sedimentationszone (4) angeordneten und damit verbundenen Ruhezone (7) zur Trennung von Schlamm und aufbereitetem Wasser, aus der das aufbereitete Wasser und Schlamm abgezogen werden,
wobei die Belüftungszone (2), die Entgasungszone (3), die Sedimentationszone (4) und die Ruhezone (7) Bestandteile eines Reaktors (1) sind und zwischen der Belüftungszone (2) und der Entgasungszone (3) auf der einen Seite und der Sedimentationszone (4) auf der anderen Seite eine Zwischenwand (5) angeordnet ist, **dadurch gekennzeichnet, dass** die Belüftungszone (2) derart ausgebildet ist, dass das Wasser durch sie vertikal hindurch strömen muss, dass ein Zwischenboden (8) zwischen der Ruhezone (7) und den übrigen Zonen (2, 3, 4) vorgesehen ist, und dass die Belüftungselemente (10) an der Oberseite des Zwischenbodens (8) im Bereich der Belüftungszone (2) angeordnet sind.

2. Vorrichtung nach Anspruch 1, **dadurch gekennzeichnet, dass** der Wasserzulauf (6) von oben in die Sedimentationszone (4) mündet.

3. Vorrichtung nach Anspruch 1 oder 2, **dadurch gekennzeichnet, dass** der Wasserzulauf (6) unterhalb des Wasserspiegels einmündet.

4. Vorrichtung nach einem der vorstehenden Ansprüche, **dadurch gekennzeichnet, dass** die Zwischenwand (5) vertikal verschiebbar ist.

5. Vorrichtung nach einem der vorstehenden Ansprüche, **dadurch gekennzeichnet, dass** der Zwischenboden (8) vertikal verschiebbar angeordnet ist und sich der Reaktorquerschnitt im oberen Bereich der Ruhezone (7) nach unten hin verjüngt, so dass zwischen der Sedimentationszone (4) und der Ruhezone (7) eine Durchtrittsöffnung mit veränderbarem Querschnitt besteht.

6. Vorrichtung nach Anspruch 5, **dadurch gekennzeichnet, dass** der Reaktorquerschnitt an einer Stelle im oberen Bereich der Ruhezone (7) dem Querschnitt des Zwischenbodens (8) entspricht.

7. Vorrichtung nach einem der vorstehenden Ansprüche, **dadurch gekennzeichnet, dass** die Oberseite des Zwischenbodens (8) eine zur Durchtrittsöffnung zur Ruhezone (7) hin abfallende Neigung von mindestens 60° aufweist.

8. Vorrichtung nach einem der vorstehenden Ansprüche, **dadurch gekennzeichnet, dass** die Unterseite des Zwischenbodens (8) so ausgebildet ist, dass sie zusammen mit der Reaktorwand (9) im oberen Bereich der Ruhezone einen sich aufweitenden Kanal bildet.

9. Vorrichtung nach einem der vorstehenden Ansprüche, **dadurch gekennzeichnet, dass** der Zwischenboden (8) innen hohl und an seiner Unterseite offen ausgebildet ist.

10. Vorrichtung nach einem der vorstehenden Ansprüche, **dadurch gekennzeichnet, dass** der Boden der Ruhezone (7) zu einem Schlammabzug (20) hin abfallend um mindestens 60° geneigt ist.

11. Vorrichtung nach einem der vorstehenden Ansprüche, **dadurch gekennzeichnet, dass** die Belüftungszone (2), die Entgasungszone (3), die Sedimentationszone (4) und gegebenenfalls die Ruhezone (7) thermisch isoliert sind.

12. Vorrichtung nach einem der vorstehenden Ansprüche, dass die Belüftungszone (2), die Entgasungszone (3), die Sedimentationszone (4) und/oder gegebenenfalls die Ruhezone (7) aufgeheizt werden können oder darin anfallende Wärme abgeführt werden kann.

13. Vorrichtung nach einem der vorstehenden Ansprüche, **gekennzeichnet durch** eine Beregnungsvorrichtung (17).

14. Vorrichtung nach einem der vorstehenden Ansprüche, **dadurch gekennzeichnet, dass** oberhalb der Entgasungszone (3) und/oder der Sedimentationszone (4) eine Abzugshaube (19) angeordnet ist.

15. Vorrichtung nach Anspruch 14, **dadurch gekennzeichnet, dass** die Abzugshaube (19) den Reaktor (1) dicht verschließt, so dass hierüber ein Unterdruck im Reaktor (1) erzeugt werden kann.

16. Vorrichtung nach einem der vorstehenden Ansprüche, **dadurch gekennzeichnet, dass** das aufbereitete Wasser aus der Ruhezone (7) dem Wasserzulauf (6) zugeführt werden kann.

17. Verfahren zur aeroben Aufbereitung von organisch beladenem Wasser und/oder zur Enthärtung von Wasser, insbesondere von industriellem Abwasser, mit einer Vorrichtung gemäß einem der vorstehenden Ansprüche, bei dem
- aufwärts strömendes Wasser mit sauerstoffhaltiger Druckluft im Gleichstrom in einer Belüftungszone (2) belüftet wird,
- die Druckluft gegebenenfalls mit darin enthaltenem, aus dem Wasser stammenden CO₂ abgeführt wird,
- sich bildende Schlammflocken und gegebenenfalls ausfällendes CaCO₃ bzw. MgCO₃ in einer Sedimentationszone (4) bis in eine Ruhezone (7) hinein absinken können, wobei das Wasser in der Sedimentationszone (4) abwärts strömt,
- der überwiegende Teil des Wassers von der Sedimentationszone (4) in die Belüftungszone (2) überführt wird.

18. Verfahren nach Anspruch 17, **dadurch gekennzeichnet, dass** zu Beginn der Aufbereitung und/oder Enthärtung das aufzubereitende oder zu enthärtende Wasser entlang der Belüftungszone, der Entgasungszone und der Sedimentationszone zirkuliert, wobei die Ruhezone zunächst verschlossen ist, und dass die Ruhezone erst dann geöffnet wird, wenn ein bestimmter Aufbereitungsgrad oder Härtegrad des Wassers erreicht ist.

19. Verfahren nach Anspruch 17 oder 18, **dadurch gekennzeichnet, dass** das aufbereitete oder enthärtete Wasser vollständig in eine Ruhezone (7), abgeführt wird, wo Schlamm und/oder Carbonatpartikel als Feststoffe vom Wasser getrennt werden und Feststoffe und Wasser getrennt voneinander aus der Trennvorrichtung abgeführt werden.

20. Verfahren nach einem der Ansprüche 17 bis 19, **dadurch gekennzeichnet, dass** die Dauer zur Aufbereitung organisch beladenen Wassers 1 bis 24 Stunden beträgt.

21. Verfahren nach einem der Ansprüche 17 bis 20, **dadurch gekennzeichnet, dass** die Dauer zur Enthärtung von Wasser 1 Minute bis 1 Stunde beträgt.

## Claims

1. A device for the aerobic purification of organics laden water and/or for the softening of water comprising
- a water intake (6),
- an aeration zone (2), with a compressed air inlet (11) with aeration elements (10), through which the water is mixed with suitably compressed air,
- a degassing zone (3) arranged downstream to the aeration zone (2) and connected therewith, wherein compressed air and water are flowing in the same direction through the degassing zone (3) and wherein the CO₂ dissolved in the water is released to the compressed air and is exhausted from the degassing zone (3) together with the compressed air,
- a sedimentation zone (4), in which sludge flakes and if applicable precipitated CaCO₃ or MgCO₃ can sink, which is connected on its upper side with the degassing zone (3) and on its lower side is connected with the aeration zone (2), and
- a quiescent zone (7) arranged below the sedimentation zone (4) and connected to it, for the separation of sludge and purified water, from which the purified water and sludge are withdrawn,
wherein the aeration zone (2), the degassing zone (3), the sedimentation zone (4) and the quiescent zone (7) are components of a reactor (1) and between the aeration zone (2) and the degassing zone (3) on the one side and the sedimentation zone (4) on the other side a partition wall (5) is arranged, **characterized in that** the aeration zone (2) is built in such a manner that the water must flow through it vertically, that an intermediate floor (8) is provided between the quiescent zone (7) and the rest of the zones (2,3,4), and that the aeration elements (10) are arranged on the upper side of the intermediate floor (8) in the region of the aeration zone (2).

2. The device according to claim 1, **characterized in that** the water inlet (6) discharges from above into the sedimentation zone (4).

3. The device according to claim 1 or 2, **characterized in that** the water inlet (6) discharges below the water surface.

4. The device according to one of the preceding claims, **characterized in that** the partition wall (5) is vertically adjustable.

5. The device according to one of the preceding claims, **characterized in that** the intermediate floor (8) is arranged so as to be vertically adjustable and the reactor cross-section tapers towards the bottom in the upper region of the quiescent zone (7), so that between the sedimentation zone (4) and the quiescent zone (7) there exists a passageway opening having a variable cross-section.

6. The device according to claim 5 **characterized in that** the reactor cross-section at a location in the upper region of the quiescent zone (7) corresponds to the cross-section of the intermediate floor (8).

7. The device according to one of the preceding claims, **characterized in that** the upper side of the intermediate floor (8) has a passageway opening to the quiescent zone (7) with a falling slope of at least 60°.

8. The device according to one of the preceding claims, **characterized in that** the lower side of the intermediate floor (8) is formed so that it torms a widening channel together with the reactor wall (9) in the upper region of the quiescent zone.

9. The device according to one of the preceding claims, **characterized in that** the intermediate floor (8) is hollow inside and is open on its lower side.

10. The device according to one of the preceding claims, **characterized in that** the floor of the quiescent zone (7) falling towards a sludge outlet (20) at a slope of at least 60°.

11. The device according to one of the preceding claims, **characterized in that** the aeration zone (2), the degassing zone (3), the sedimentation zone (4) and if necessary the quiescent zone (7) are thermally insulated.

12. The device according to one of the preceding Claims, that the aeration zone (2), the degassing zone (3), the sedimentation zone (4) and/or if necessary the quiescent zone (7) can be heated or accruing heat can be removed.

13. The device according to one of the preceding claims, **characterized by** a sprinkler device (17).

14. The device according to one of the preceding claims, **characterized in that** above the degassing zone (3) and/or the sedimentation zone (4) an exhaust hood (19) is arranged.

15. The device according to Claim 14, **characterized in that** the exhaust hood (19) fits tightly to the reactor so that a reduced pressure may be produced in the reactor (1).

16. The device according to one of the preceding claims, **characterized in that** the purified water can be fed from the quiescent zone (7) to the water intake (6).

17. A method for the aerobic, purification of organics laden water and/or for the softening of water, especially industrial wastewater, with a device in accordance with one of the preceding claims, in which
- water which is flowing upwardly in parallel with oxygen-containing compressed air is aerated in an aeration zone (2),
- the compressed air possibly containing CO₂ therein originating from the water is discharged,
- the forming sludge flakes and, if applicable, CaCO₃ or MgCO₃ precipitating in a sedimentation zone (4) can sink towards and into a quiescent zone (7), wherein the water flows downwards in the sedimentation zone (4).
- most of the water from the sedimentation zone (4) is transported into the aeration zone (2).

18. The method according to claim 17, **characterized in that**, at the beginning of the purification and/or softening the water to be purified or softened circulates along the aeration zone, the degassing zone and the sedimentation zone, wherein the quiescent zone is initially closed up, and that the quiescent zone is opened only then, whenever a determined degree of purification or hardness is reached.

19. The method according to claim 17 or 18, **characterized in that** the purified or softened water is discharged completely into a quiescent zone (7), where sludge and/or carbonate particles are separated as solid matter from the water and the solid matter and water separated from each other are discharged from the separation device.

20. The method according to one of claims 17 through 19, **characterized in that** the duration for the purification of organics-laden water is 1 to 24 hours.

21. The method according to one of claims 17 through 20, **characterized in that** the duration for the softening of water is 1 minute to 1 hour.

## Revendications

1. Disposition pour la préparation aérobie d'eau organiquement chargée et/ou pour l'adoucissement de l'eau avec
- une arrivée d'eau (6),
- une zone d'aération (2), avec une arrivée d'air comprimé (11) avec des éléments d'aération (10), qui mélangent l'eau à l'air comprimé approprié,
- une zone de dégazéification (3) disposée en aval de la zone d'aération (2) et reliée à cette dernière dans le sens d'écoulement de l'eau, l'air comprimé et l'eau traversant la zone de dégazéification (3) en courant continu, et le CO2 dissout dans l'eau étant délivré à l'air comprimé et étant ensemble évacué avec l'air comprimé hors de la zone de dégazéification (3),
- une zone de sédimentation (4), dans laquelle des flocons de boue et éventuellement des dépôts de CaCO₃ respectivement MgCO₃ peuvent se précipiter, qui est reliée par sa face supérieure à la zone de dégazéification (3) et par sa face inférieure à la zone d'aération (2), et
- une zone de repos (7) reliée et disposée en dessous de la zone de sédimentation (4) pour la séparation de la boue et d'eau préparée, zone hors de laquelle sont extraites l'eau préparée et la boue,
la zone d'aération (2), la zone de dégazéification (3) la zone de sédimentation (4) et la zone de repos (7) étant des parties constituantes d'un réacteur (1) et entre la zone d'aération (2) et la zone de dégazéification (3) sur une face et de la zone de sédimentation (4) sur l'autre face, il est disposé une cloison (5), **caractérisé en ce que** la zone d'aération (2) est réalisée de sorte que l'eau doit s'écouler à travers celle-ci, **en ce qu'**un fond intermédiaire (8) est prévu entre la zone de repos (7) et les autres zones (2, 3, 4) et **en ce que** les éléments d'aération (10) sont disposées sur la face supérieure du fond intermédiaire (8) dans la zone d'aération (2).

2. Dispositif selon la revendication 1, **caractérisé en ce que** l'arrivée d'eau (6) débouche par le haut dans la zone de sédimentation (4).

3. Dispositif selon la revendication 1 ou 2, **caractérisé en ce que** l'arrivée d'eau (6) débouche en dessous du niveau de l'eau.

4. Dispositif selon l'une des revendications précédentes, **caractérisé en ce que** la cloison (5) est coulissante verticalement.

5. Dispositif selon l'une des revendications précédentes, **caractérisé en ce que** le fond intermédiaire (8) est disposé coulissant verticalement et la section transversale de réacteur se termine en cône vers le bas dans la partie supérieure de la zone de repos (7) de sorte qu'entre la zone de sédimentation (4) et la zone de repos (7), il se trouve une ouverture de passage avec une section transformable.

6. Dispositif selon la revendication 5, **caractérisé en ce que** la section de réacteur correspond à un endroit dans la partie supérieure de la zone de repos (7) à la section transversale du fond intermédiaire (8).

7. Dispositif selon l'une des revendications précédentes, **caractérisé en ce que** la face supérieure du fond intermédiaire (8) présente une inclinaison descendant en direction d'une ouverture de passage de la zone de repos (7) au moins de 60°.

8. Dispositif selon l'une des revendications précédentes, **caractérisé en ce que** la face inférieure du fond intermédiaire (8) est réalisée de sorte qu'elle forme ensemble avec la paroi de réacteur (9) dans la zone supérieure de la zone de repos un canal s'élargissant.

9. Dispositif selon l'une des revendications précédentes, **caractérisé en ce que** le fond intermédiaire (8) est creux à l'intérieur et est ouverte sur la face inférieure.

10. Dispositif selon l'une des revendications précédentes, **caractérisé en ce que** le fond de la zone de repos (7) est incliné d'au mois 60° en descendant en direction d'une extraction de boue (20).

11. Dispositif selon l'une des revendications précédentes, **caractérisé en ce que** la zone d'aération (2), la zone de dégazéification (3), la zone de sédimentation (4) et/ou éventuellement la zone de repos (7) peuvent être isolées thermiquement.

12. Dispositif selon l'une des revendications précédentes, **caractérisé en ce que** la zone d'aération (2), la zone de dégazéification (3), la zone de sédimentation (4) et/ou éventuellement la zone de repos (7) peuvent être chauffées ou la chaleur contenue peut être évacuée.

13. Dispositif selon l'une des revendications précédentes, **caractérisé par** un dispositif d'irrigation (17).

14. Dispositif selon l'une des revendications précédentes, **caractérisé en ce qu'**au dessus de la zone de dégazéification (3) et/ou de la zone de sédimentation (4), il est disposé une hotte d'extraction (19).

15. Dispositif selon la revendication 14, **caractérisé en ce que** la hotte d'extraction (19) ferme hermétiquement le réacteur (1) de sorte qu'il peut être généré une dépression dans le réacteur (1).

16. Dispositif selon l'une des revendications précédentes, **caractérisé en ce que** l'eau préparée provenant de la zone de repos (7) peut être amenée à l'amenée d'eau (6).

17. Procédé pour la préparation aérobe d'eau chargée organiquement et/ou pour l'adoucissement de l'eau en particulier d'eau usée industrielle avec un dispositif conforme à l'une des revendications précédentes où
- l'eau s'écoulant vers le haut est aérée avec de l'air comprime contenant de l'oxygène en courant continu dans une zone d'aération (2),
- l'air comprimé est évacué éventuellement avec le CO₂ provenant de l'eau (2),
- des flocons de boue en formation et éventuellement du CaCO₃ respectivement du MgCO₃ précipités peuvent se déposer dans une zone de sédimentation (4) jusque dans une zone de repos (7), l'eau s'écoulant vers le bas dans la zone de sédimentation (4),
- la partie principale de l'eau est transférée de la zone de sédimentation (4) dans la zone d'aération (2).

18. Procédé selon la revendication 17, **caractérisé en ce que** au début de la préparation et/ou de l'adoucissement, l'eau à préparer ou à adoucir circule le long de la zone d'aération, de la zone de dégazéification et de la zone de sédimentation, la zone de repos étant tout d'abord fermée et **en ce que** la zone de repos n'est ouverte que quand un degré défini de préparation ou un degré de dureté de l'eau est atteint.

19. Procédé selon la revendication 17 ou 18, **caractérisé en ce que** l'eau préparée ou durcie est évacuée complètement dans une zone de repos (7), où la boue et/ou les particules de carbonate sont séparées de l'eau comme substance solide et les substances solides et l'eau sont évacuées séparément hors du dispositif de séparation.

20. Procédé selon l'une des revendications 17 à 19, **caractérisé en ce que** la durée de la préparation de l'eau chargée organiquement est d'1 à 24 heures.

21. Procédé selon l'une des revendications 17 à 20, **caractérisé en ce que** la durée de l'adoucissement de l'eau est d'1 minute à 1 heure.
